# EUROPÄISCHE PATENTSCHRIFT

(11) **EP 0 683 305 B1**
(45) Veröffentlichungstag und Bekanntmachung des Hinweises auf die Patenterteilung: **14.07.1999**
(21) Anmeldenummer: 95107476.4
(22) Anmeldetag: 17.05.1995
(51) Int. Cl.: F01N 3/28, F01N 7/18

(54) **Verfahren zur Herstellung eines Bauteiles für die Abgasanlage für Kraftfahrzeuge**
Method of manufacturing a component for exhaust device of motor vehicles
Procédé de fabrication d'un élément du système d'échappement des véhicules automobiles

(30) Priorität: 21.05.1994 DE 4417984
(43) Veröffentlichungstag der Anmeldung: 22.11.1995
(73) Patentinhaber: Schmitz & Brill GmbH, D-57413 Finnentrop (DE)
(72) Erfinder: Willeke, Winfried, S 57439 Attendorn (DE)
(74) Vertreter: Köchling, Conrad-Joachim

(56) Entgegenhaltungen:
- DE-A- 3 608 120
- GB-A- 2 007 994

## Beschreibung

Die Erfindung betrifft ein Verfahren zur Herstellung eines Bauteiles für die Abgasanlage für Kraftfahrzeuge.

Bisher werden solche Katalysatoren in der Weise hergestellt, daß Rohre oder geformte Hohlkörper vorgefertigt werden, in die dann entsprechendes Katalytisch beschichtetes Drahtmaterial eingebracht und befestigt wird, wie in GB-A-2 007 994 gezeigt.

Die Herstellung ist aufwendig, da die Rohre mit entsprechenden Flanschverbindungen oder dergleichen versehen werden, damit diese an die Abgasrohre des Kfz angeschlossen werden können. Solche Anschlußelemente müssen häufig angeschweißt werden, so daß sich durch die Schweißnähte zusätzliche Fehlerquellen bilden, die beispielsweise zur Geräuschbildung, zu einer Verringerung der Lebensdauer infolge des Auftrennens der Schweißnaht und zu einer Behinderung der Strömung des Abgases führen.

Ausgehend von diesem Stand der Technik liegt der Erfindung die Aufgabe zugrunde, ein Verfahren zu schaffen, mit dem ein Katalysatorbauteil in einfacher Weise unter Vermeidung von Schweißnähten insbesondere auch bei der Ausbildung von Anschlußverjüngungen herzustellen ist, wobei eine weitgehend gleichmäßige Verteilung des Abgases über den Querschnitt des Katalysatorbauteiles erwünscht ist.

Zur Lösung dieser Aufgabe schlägt die Erfindung vor, daß in ein Rohrstück Drahtmaterial in Form von Drahtwolle gestopft wird, so daß der gesamte Rohrquerschnitt und eine für die Katalysatorwirkung ausreichende Rohrlänge mit Drahtmaterial gefüllt ist, daß dann das Drahtmaterial mit der Innenmantelfläche des Rohrstücks verlötet wird, nachfolgend das Rohr im Wege des Hydroumformverfahrens so aufgeweitet wird, daß es im Mittelbereich einen größeren Durchmesser aufweist als die Endbereiche, die somit gegenüber dem Mittelbereich verjüngte Stutzen bilden, und daß dann das Drahtmaterial mit katalytischem Material beschichtet wird.

Bevorzugt ist dabei vorgesehen, daß nach dem Stopfen des Rohrstückes das Rohrstück in Sollform mechanisch gebogen wird, wobei die Verlötung des Drahtmaterials vor oder nach dem Biegevorgang durchgeführt wird.

Durch die erfindungsgemäße Ausbildung ist es möglich, zunächst Edelstahlwolle in chaotischer Anordnung in das noch gerade Rohrstück einzubringen und in dieses hineinzustopfen. Das Rohr ist damit über seinem gesamten Querschnitt für das Stopfen mit Edelstahlwolle zugänglich.

Danach kann das Rohr auf einer herkömmlichen CNC-Biegemaschine gebogen werden, um eine gewünschte Krümmung des Rohres zu erreichen. Vorzugsweise nach dem Biegen oder auch vor dem Biegen wird die im Rohr befindliche Drahtwolle mit der Innenfläche des Rohres in einem Schutzgasofen unter Schutzgasatmosphäre verlötet. Die Löttemperatur beträgt dabei ca. 1040°C.

Geeignete Lötmittel sind im Stand der Technik bekannt.

Nach dem Löten wird dann die endgültige Form dieses Bauteiles mit integrierten Anschlußrohren bzw. Anschlußrohrstutzen hergestellt, indem das Rohr in die Unterform eines Werkzeuges eingelegt wird und dann die Oberform aufgesetzt wird, wobei die beiden Formen eine Konturierung aufweisen, die der Endform des Bauteiles entspricht. Das in der Form gehaltene Rohrstück kann dann im Wege des Hydroumformens durch hydrostatischen Druck aufgeweitet werden, so daß es im Mittelbereich einen größeren Durchmesser aufweist, als im Endbereich, wobei die Endbereiche die Anschlußrohre bilden. Es wird auf diese Weise ein Bauteil in gewünschter Form und Dimensionierung gefertigt, welches keine Schweißnähte oder dergleichen störende Elemente aufweist. Gegebenenfalls ist es auch möglich, das Rohr durch Sicken oder dergleichen zu versteifen, die im Umformprozeß mit eingebracht werden können.

Nach der endgültigen Formung des Bauteiles kann dieses aus der Form entnommen werden. Danach kann die in dem fertigen Bauteil befindliche Stahlwolle mit katalytischem Material beschichtet werden, so daß das fertige Bauteil mit katalytisch beschichteter Füllung und gegebenenfalls auch Innenwandung entsteht.

Durch die chaotische Anordnung des Drahtmaterials innerhalb des Bauteiles wird das Abgas sehr gut über die Wirkfläche der katalytischen Schicht verteilt. Hieraus resultiert unter anderem der Vorteil, daß eine Verringerung des Katalysatorvolumens möglich ist, weil eine bessere Ausnutzung des Katalysators erfolgt. Durch die erfindungsgemäße Verfahrensweise ist es auch möglich, komplexe Gehäuseformen herzustellen, wobei auch Mittel zur Geräuschdämpfung, beispielsweise Sickungen oder dergleichen aufgebracht werden können. Das Bauteil selbst ist ohne Schweißnähte ausgebildet, so daß bei der bestimmungsgemäßen Benutzung auch nicht die Gefahr besteht, daß das Bauteil im Bereich der Schweißnähte aufreißt oder dergleichen. Auch wird durch das Fehlen der Schweißnähten eine glatte Strömung entlang der Wandung des Bauteiles gewährleistet.

Die Erfindung ist nachstehend anhand eines Ablaufschemas verdeutlicht.
Es zeigt:
- Fig. 1: Das Ausgangsteil zur Herstellung eines entsprechenden Bauteiles;
- Fig. 2 bis 4: Zwischenstufen der Formgebung;
- Fig. 5: eine weitere Zwischenstufe;
- Fig. 6: das fertige Werkstück.

Erfindungsgemäß wird das entsprechende Bauteil für die Abgasanlage eines Kfz in der Weise herstellt, daß in ein Rohrstück 1, welches geringeren Durchmesser hat, als dem Enddurchmesser des fertigen Werkstückes entspricht, Edelstahlwolle 2 eingepreßt und eingestopft wird, und zwar über einen solchen Längsbereich, der dem späteren katalytisch wirksamen Bereich entspricht. Die Stopfung erfolgt in der Weise, daß eine hohe Raumerfüllung erreicht wird und eine chaotische Anordnung der Drahtfasern erreicht ist.

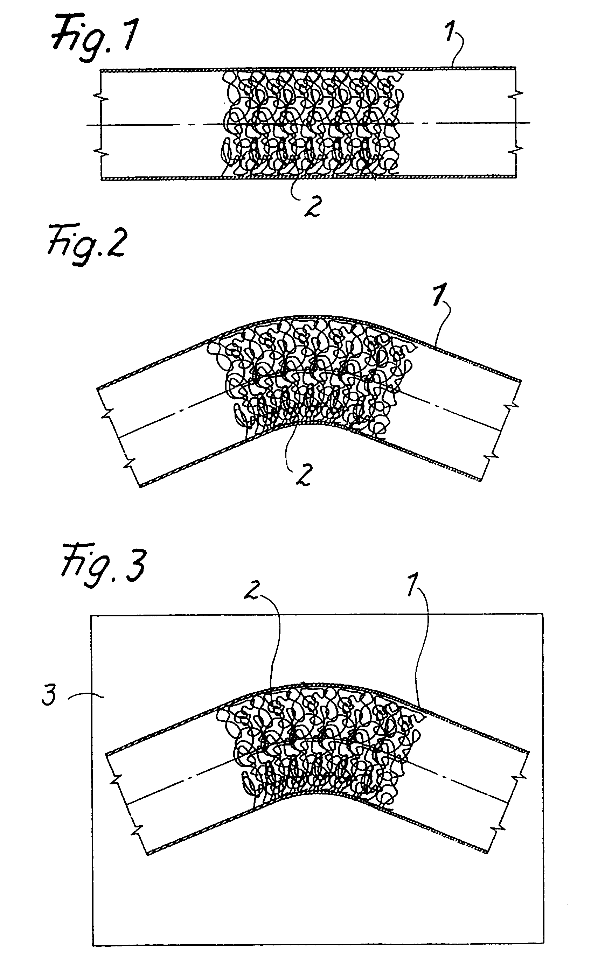

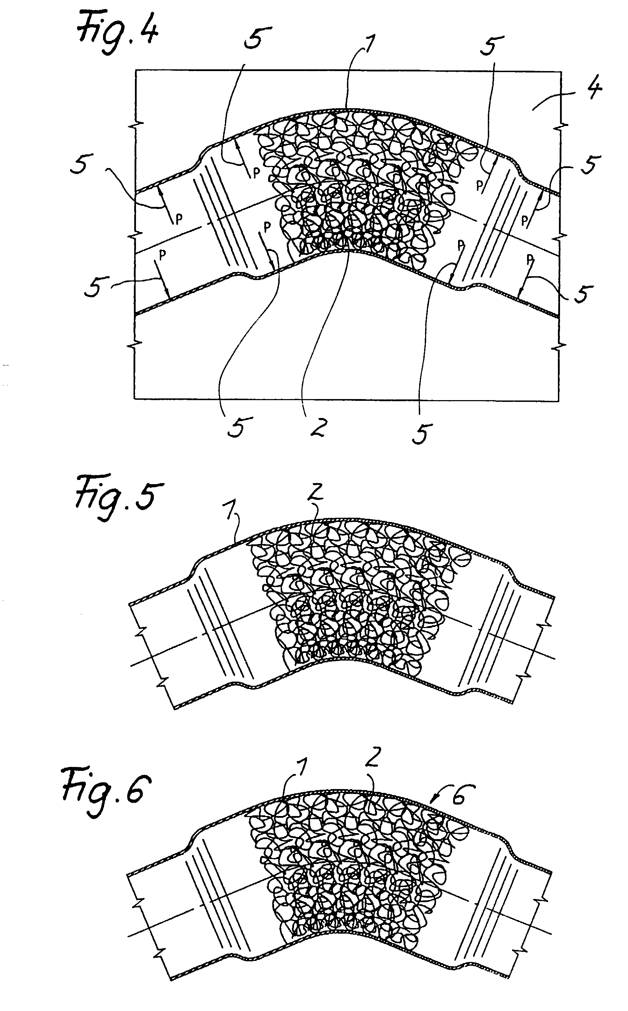

Nachfolgend kann das Rohrstück 1 auf einer Biegemaschine vorgebogen werden, so daß es die Form gemäß Figur 2 erhält. Gemäß Figur 3 kann dann in einem Lötofen 3 die Verlötung der Stahlwolle mit dem Innenmantel des Rohrstückes 1 erfolgen. Die Verlötung erfolgt unter Schutzgasatmosphäre bei ca. 1040 °C mit üblichen Lötmitteln.

In einem nächsten Arbeitsgang, der in Figur 4 verdeutlicht ist, wird das Rohrstück 1 in die Unterform eines Werkzeuges 4 eingelegt und dessen Oberform geschlossen, wobei die Unterform und Oberform entsprechend dem Endmaß des endgültigen Bauteiles geformt sind. Das Bauteil wird dann über innenseitig aufgebrachten hydrostatischen Druck 5 auf die Endform aufgeweitet, die der Konturierung im Werkzeug entspricht. Dabei wird das Mittelteil des Bauteiles auf einen größeren Durchmesser aufgeweitet, als die Enden des Rohrstückes, die quasi die Anschlußrohre an die weiteren Rohre des Abgassystemes bilden. Da bei der Aufweitung des Rohrstückes 1 in die Sollkontur gemäß Figur 4 eine Dehnung und Streckung der darin befindlichen Drahtwolle erfolgt, was zu einer Beschädigung der katalytischen Beschichtung des Drahtmaterial führen könnte, sofern diese schon beschichtet wäre, wird die katalytische Beschichtung der Stahlwolle in einem nachfolgenden Arbeitsschritt gemäß Figur 5 durchgeführt. Das fertige Werkstück 6 mit katalytischer Beschichtung ist in Figur 6 gezeigt.

Insbesondere ist es auch möglich, auf den Biegevorgang zu verzichten und das Bauteil als geradliniges Bauteil auszubilden.

## Patentansprüche

1. Verfahren zur Herstellung eines Bauteiles für die Abgasanlage für Kraftfahrzeuge, wobei in ein Rohrstück aus Metall Drahtmaterial in Form von Drahtwolle gestopft wird, so daß der gesamte Rohrquerschnitt und eine für eine Katalysatorwirkung ausreichende Rohrlänge mit Drahtmaterial gefüllt ist, daß dann das Drahtmaterial mit der Innenmantelfläche des Rohrstücks verlötet wird, nachfolgend das Rohr im Wege des Hydroumformverfahrens aufgeweitet so wird, daß es im Mittelbereich einen größeren Durchmesser aufweist als die Endbereiche, die somit gegenüber dem Mittelbereich verjüngte Stutzen bilden, und daß dann das Drahtmaterial mit katalytischem Material beschichtet wird.

2. Verfahren nach Anspruch 1, **dadurch gekennzeichnet, daß** nach dem Stopfen des Rohrstückes das Rohrstück in Sollform mechanisch gebogen wird, wobei die Verlötung des Drahtmaterials vor oder nach dem Biegevorgang durchgeführt wird.

## Claims

1. A method for producing a component for the exhaust system for motor vehicles, whereby wire material in the form of wire wool is stuffed into a piece of pipe made of metal so that the entire pipe cross section and a pipe length adequate for catalytic action is filled with wire material, so that then the wire material is soldered with the inner shell surface of the piece of pipe, subsequently the pipe is expanded in the course of the hydro-forming process so that it has a larger diameter in the centre region than the end regions, which consequently form reduced connection pieces in comparison with the centre region, and so that then the wire material is coated with catalytic material.

2. A method according to claim 1,
**characterised in that** after the piece of pipe has been stuffed, the piece of pipe is mechanically bent into the desired shape, whereby the soldering of the wire material is perfomed before or after the bending operation.

## Revendications

1. Procédé pour la fabrication d'une pièce pour le système d'échappement de véhicules automobiles, un matériau en fil métallique en forme de laine métallique étant bourré dans une partie de tuyau métallique, de sorte que la totalité de la section du tuyau et une longueur de tuyau suffisante pour un effet catalytique sont remplis avec un matériau en fil métallique, le matériau en fil métallique est alors soudé avec la surface intérieure de la partie de tuyau, qu'ensuite le tuyau est élargi au cours du processus d'hydroformage de telle sorte qu'il présente, dans la partie centrale, un diamètre supérieur aux parties terminales qui forment ainsi des tubulures rétrécies par rapport à la partie centrale, et qu'après le matériau en fil métallique est recouvert d'un matériau catalytique.

2. Procédé selon la revendication 1, caractérisé en ce que, après le bourrage de la partie de tuyau, celle-ci est cintrée mécaniquement dans la forme de référence, le soudage du matériau en fil métallique étant réalisé avant ou après le processus de cintrage.
